# EUROPEAN PATENT SPECIFICATION

(11) **EP 1 661 336 B1**
(45) Date of publication and mention of the grant of the patent: **05.11.2008**
(21) Application number: 04780111.3
(22) Date of filing: 04.08.2004
(51) Int. Cl.: H04L 12/56

(54) **METHOD AND APPARATUS FOR ASSIGNING TRAFFIC CLASSES TO VIRTUAL CHANNELS IN COMMUNICATIONS NETWORKS**
VERFAHREN UND VORRICHTUNG ZUM ZUORDNEN VON VERKEHRSKLASSEN AN VIRTUELLE KANÄLE IN KOMMUNIKATIONSNETZEN
PROCEDE ET APPAREIL POUR ATTRIBUER DES CLASSES DE TRAFIC A DES CANAUX VIRTUELS DANS DES RESEAUX DE COMMUNICATION

(30) Priority: 04.08.2003 US 492566 P; 16.07.2004 US 892990
(43) Date of publication of application: 31.05.2006
(73) Proprietor: Intel Corporation, Santa Clara, CA 95052 (US)
(72) Inventor: SOLOMON, Gary, Acton, MA 01720 (US); CHRIST, Chris, Folsom, CA 95630 (US); FEUERSTRAETER, Mark, Granite Bay, CA 95746 (US); HAN, Woojong, Phoenix, AZ 85044 (US)
(74) Representative: Dunlop, Hugh Christopher
(86) International application number: PCT/US2004/025217
(87) International publication number: WO 2005/015858

(56) References cited:
- WO-A-02/03622
- WO-A-03/019391
- US-A1- 2001 056 459
- US-A1- 2003 115 391

## Description

Embodiments of the invention generally relate to the field of electronic systems, and more particularly, to a method and apparatus for assigning data traffic classes to virtual channels in communications networks.
US 2003/0115391 discusses an alternative point-to-point interconnection architecture and protocol to provide a scaleable/extensible general input/output communication platform for deployment within an electronic appliance.
The present invention provides a method of managing a plurality of virtual channels as set out in claim 1. The present invention also provides a node as set out in claim 7 and a system as set out in claim 12. The present invention further provides a computer readable storage medium as set out in claim 13.

Embodiments of the invention are illustrated by way of example, and not by way of limitation, in the figures of the accompanying drawings in which like reference numerals refer to similar elements and in which:
Fig. 1 is a block diagram of an electronic system, according to one embodiment;
Fig. 2a is a block diagram of a bypass capable virtual channel (BVC), according to one embodiment;
Fig. 2b is a block diagram of an ordered virtual channel (OVC), according to one embodiment;
Fig. 2c is a block diagram of a multicast virtual channel (MVC), according to one embodiment;
Fig. 3 is an architectural diagram of a virtual channel manager, according to one embodiment;
Fig. 4a is a graphical illustration of a BVC flow control credit initialization data link layer packet (DLLP) format, according to one embodiment;
**Fig. 4b** is a graphical illustration of an OVC flow control credit initialization DLLP format, according to one embodiment;
**Fig. 4c** is a graphical illustration of an MVC flow control credit initialization DLLP format, according to one embodiment;
**Fig. 5a** is a graphical illustration of a relationship between virtual channel index (VC Index) and virtual channel identification number (VC ID), according to one embodiment;
**Fig. 5b** is a graphical illustration of exchanging flow control credit initialization DLLPs between two nodes, according to one embodiment;
**Fig. 6** is a flow chart of a method for BVC initialization, according to one embodiment;
**Fig. 7** is a flow chart of a method for OVC and MVC initialization, according to one embodiment;
**Fig. 8a** is a graphical illustration of a point-to-point communication link, showing supported virtual channels between two nodes, according to one embodiment;
**Fig. 8b** is a graphical illustration of a resource allocation of virtual channels between two nodes, according to one embodiment;
**Fig. 9a** is a table of a data traffic class to virtual channel mapping for initialized BVCs, according to one embodiment;
**Fig. 9b** is a table of a data traffic class to virtual channel mapping for initialized OVCs, according to one embodiment;
**Fig. 9c** is a table of a data traffic class to virtual channel mapping for initialized MVCs, according to one embodiment;
**Fig. 10** is a graphical illustration of an initialized and transformed active virtual channels, according to one embodiment;
**Fig. 11** is a graphical illustration of a route header packet format, according to one embodiment; and
**Fig. 12** is a flow chart of a method to route data through a virtual channel, according to one embodiment.

### DETAILED DESCRIPTION

Embodiments of the present invention are generally directed to a method and apparatus for assigning data traffic classes to virtual channels in communication networks. In accordance with one embodiment, a virtual channel manager is introduced herein. As described more fully below, the innovative virtual channel manager is operable to allocate a node's queue resources to support a virtual channel on a point-to-point communication link with another node based on content in a received data packet from another node on the point-to-point communication link.

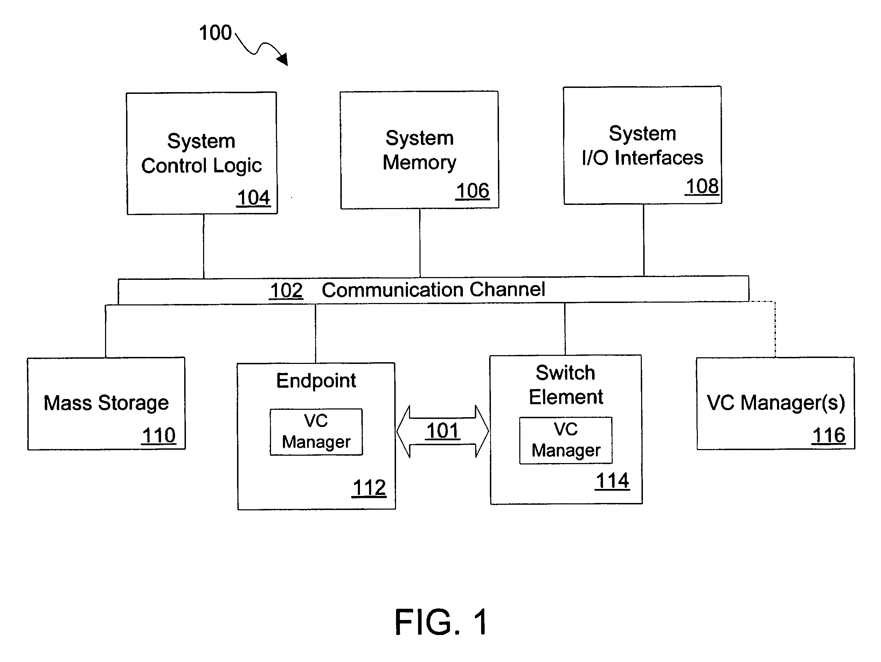

**Fig. 1** is a block diagram of an electronic system incorporating the invention, according to one embodiment. In accordance with the embodiment of Fig. 1, electronic system 100 is depicted comprising point-to-point communication link 101, communication channel 102, system control logic 104, system memory 106, system input/output (I/O) interfaces 108, mass storage 110, endpoint 112, switch element 114 and VC manager(s) 116, each coupled as depicted.

In one embodiment, different types of data and/or instructions (hereinafter deemed as "data") are assigned to different data traffic classes. The data traffic classes are assigned to enable class of service differentiation for data transmitted in an electronic system or a communication network. In this regard, a data traffic class identifier is assigned for data traffic classes having a higher priority or a lower priority as compared to other data traffic classes transmitted from one or more source nodes to one or more destination nodes in an electronic system or a communication network.

In one embodiment, data traffic classes are transmitted through point-to-point communication link 101 in electronic system 100 from a source node to a destination node. For example, the source node may be endpoint 112 and the destination node may be another endpoint 112. Data traffic classes may also be transmitted on point-to-point communication link 101 from the source node to the destination node through an intermediary node or a series of intermediary nodes, such as switch element 114. In that regard, data traffic classes may also be transmitted on point-to-point communication link 101 between endpoint 112 and switch element 114 (as shown in Fig. 1) or between a switch element 114 and another switch element 114 (not shown in Fig. 1).

In one embodiment, virtual channels are utilized to facilitate the efficient transmission of data over point-to-point communication link 101. These virtual channels provide a means of supporting multiple independent logical communication channels on point-to-point communication link 101. Thus, for example, data associated with different data traffic classes may be logically channeled by multiplexing the different data traffic classes onto point-to-point communication link 101.

Before data can be transmitted on point-to-point communication link 101, adequate queue resources are needed by the source and destination nodes coupled to the link, for example, endpoint 112 and switch element 114, to support one or more virtual channels. Adequate queue resources are at least based on the memory capacity needed to transmit and/or a receive data through a virtual channel. Thus, endpoint 112 or switch element 114 may initialize a virtual channel on point-to-point communication link 101 if adequate queue resources exist to support the virtual channel. In that regard, communication protocols are introduced which, as will be developed more fully below, support one or more innovative features including, but not limited to, initializing and optionally transforming one or more virtual channels on point-to-point communication link 101, mapping of data traffic classes to the initialized virtual channel(s) and routing data traffic classes through the initialized and mapped virtual channel(s). According to an example implementation, all or at least a portion of the features listed above may be accomplished at the device level without the need for external software.

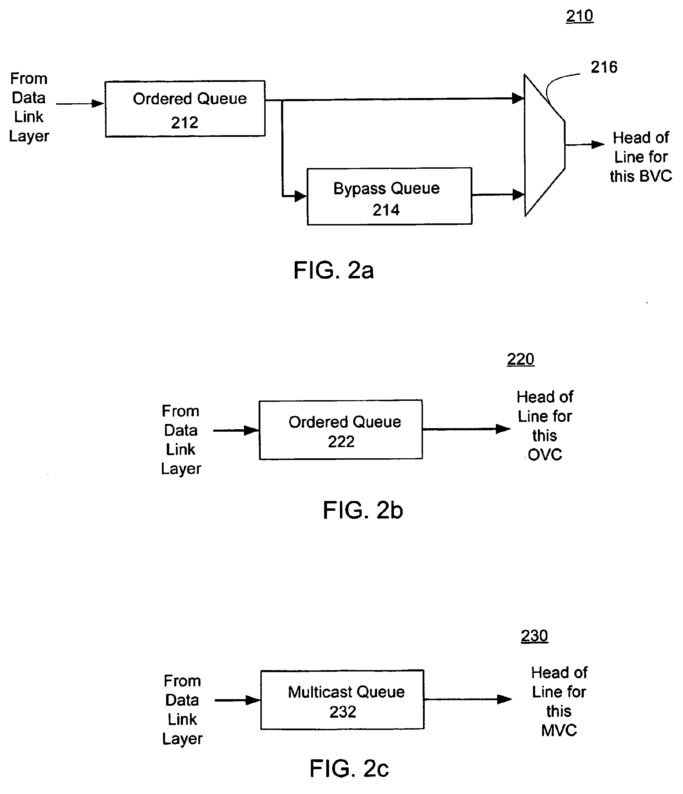

**Fig. 2a** is a block diagram of a bypass capable virtual channel (BVC), according to one embodiment. In accordance with one embodiment, BVC 210 is a given type of virtual channel supported on point-to-point communication link 101 between endpoint 112 and switch element 114. A BVC is supported by two types of queue resources, a bypass queue and an ordered queue. In that regard, ordered queue 212 and bypass queue 214 are first-in-first-out (FIFO) queues that support the transmission of data through BVC 210. Bypass queue 214 is used to place data marked as "bypassable" while other data is placed in ordered queue 212. By placing the bypassable marked data in bypass queue 214, and placing data that is not marked as "bypassable" in the ordered queue 212, the data not marked as "bypassable" can continue to pass through ordered queue 212 should the bypassable marked data packets become stalled or delayed, thus avoiding potential data deadlocks through BVC 210.

Data packets utilizing BVC 210 satisfy packet ordering requirements by propagating to the head of ordered queue 212 in the order that they were received into the tail of ordered queue 212. Once a data packet reaches the head of ordered queue 212 its subsequent handling is determined by arbiter 216 according to whether or not the data packet was identified as being 'bypassable'

Data packets marked as 'bypassable' that have propagated to the head of ordered queue 212 and cannot make further forward progress (i.e. insufficient virtual channel resources are available to transmit the data packet) are identified by arbiter 216 as bypassable and are removed from the head of ordered queue and placed into the tail of bypass queue 214. This allows other data packets not marked as "bypassable" to bypass the bypassable marked data packets.

**Fig. 2b** is a block diagram of an ordered virtual channel (OVC), according to one embodiment. OVC 220 is depicted comprising an ordered queue 222.

In one embodiment, OVC 220 is a virtual channel of a given type supported on point-to-point communication link 101 between, for example, endpoint 112 and switch element 114. In that regard, ordered queue 222 is a FIFO queue that propagates data packets transmitted through OVC 220 in the order that they were received into the tail of ordered queue 222. OVC 220 has no bypass capability.

**Fig. 2C** is a block diagram of a multicast virtual channel (MVC), according to one embodiment. MVC 230 is depicted comprising a multicast queue 232.

In one embodiment, MVC 230 is a virtual channel of a given type supported on point-to-point communication link 101 between, for example, endpoint 112 and switch element 114. In that regard, multicast queue 232 is a FIFO queue that propagates multicast data packets (data addressed to one or more destinations) in the order that they were received into the tail of multicast queue 232. MVC 230 has no bypass capability.

In one embodiment, BVC and OVC virtual channel types are used to transmit unicast data (data addressed to one destination). MVC virtual channel types are used to transmit multicast data (data addressed to more than one destination). MVC virtual channel types use one type of queue resource, a single FIFO queue, which is similar to the resources needed to support an OVC. However, since multicast data, as opposed to unicast data, is routed through MVC virtual channel types on point-to-point communication link 101, it is deemed a multicast queue.

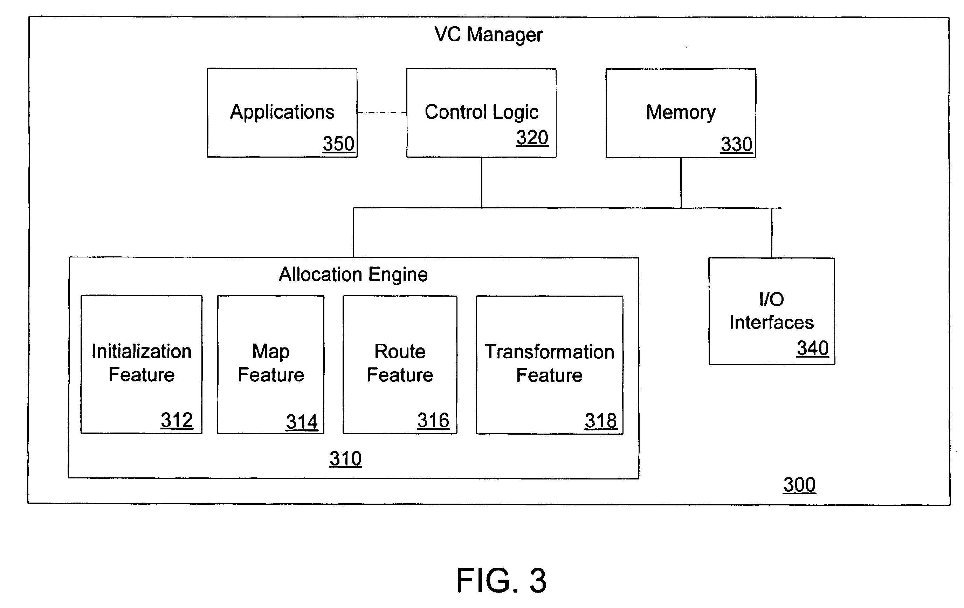

**Fig. 3** is an architectural diagram of a virtual channel manager, according to one example embodiment. VC manager 300 is depicted comprising one or more of an allocation engine 310, control logic 320, memory 330, I/O interfaces 340, and optionally one or more applications 350.

In accordance with one embodiment, allocation engine 310 is depicted comprising one or more of an initialization feature 312, a map feature 314, route feature 316 and transformation feature 318. As will be developed more fully below, initialization feature 312, map feature 314, route feature 316 and transformation feature 318 initialize one or more virtual channels on a point-to-point communication link between two nodes, optionally transform uncommon virtual channel types between the nodes, map data traffic classes to the initialized and transformed virtual channels and then route all subsequent data to the mapped, initialized and optionally transformed virtual channels.

As used herein, control logic 320 controls the overall operation of VC manager 300 and is intended to represent any of a wide variety of logic device(s) and/or executable content to implement the operation of VC manager 300, described herein. In this regard, control logic 320 may well be comprised of a microprocessor, network processor, microcontroller, field programmable gate array (FPGA), application specific integrated circuit (ASIC), executable content to implement such control features and/or any combination thereof. In alternate embodiments, the features and functionality of control logic 320 are implemented within allocation engine 310.

According to one embodiment, control logic 320 invokes an instance of allocation engine 310 to initialize one or more virtual channels on a point-to-point communication link between two nodes, map data traffic classes to the initialized virtual channel(s) and then route all subsequent data traffic classes to the mapped virtual channels.

As used herein, memory 330 is intended to represent a wide variety of memory media including, but not limited to volatile memory, non-volatile memory, flash and programmatic variables or states. According to an example embodiment, memory 330 is used by allocation engine 310 to temporarily store information related to the virtual channels supported by each node on a point-to-point communication link between the two nodes. In this regard, memory 330 includes a virtual channel resource table with one or more entries for placing information related to the types of virtual channels supported by each node on the point-to-point communication link.

Memory 330 also comprises a memory register to temporarily store one or more bit flags to signal support or lack of support for a given virtual channel on the point-to-point communication link.

According to an example embodiment, memory 330 is used by allocation engine 310 to temporarily store information related to the initialization and mapping of virtual channel resources to data traffic classes. In this regard, memory 330 may well include temporary tables with one or more entries for placing initialization and map information for the initialization and mapping of virtual channels to data traffic classes over a point-to-point communication link between two nodes. The mapping information in the mapping table may be either statically (e.g. at start-up) or dynamically (e.g. at run-time) entered by allocation engine 310.

According to an example embodiment, memory 330 is also used to store executable content. The executable content is used by control logic 320 to execute at least a subset of the executable content to implement an instance of allocation engine 310.

As used herein, I/O interfaces 340 provides a communications interface between VC manager 300 and an electronic system. For example, VC manager 300 may be implemented as an element of a computer system, wherein I/O interfaces 340 provides a communications interface between VC manager 300 and the computer system via a communication channel. In this regard, control logic 320 can receive a series of instructions from application software external to VC manager 300 via I/O interfaces 340. The series of instructions may invoke control logic 220 to implement one or more features of signal engine 210.

In an example embodiment, VC manager 300 includes one or more applications 350 to provide internal instructions to control logic 320. As used herein, such applications 350 are invoked to generate a user interface, e.g., a graphical user interface (GUI), to enable administrative features, and the like. In alternate embodiments, one or more features of allocation engine 310 are implemented as applications 350, invoked by control logic 320 to invoke such features.

According to one embodiment, data is transmitted on point-to-point communication link 101. As introduced above, the data may be assigned to a data traffic class, for example, to enable class of service differentiation. Further, to facilitate the efficient transmission of the data traffic classes from endpoint 112 to switch element 114, one or more virtual channels are established or initialized on point-to-point communication link 101.

A data packet, transmitted from endpoint 112 to switch element 114 on point-to-point communication link 101, is received by VC manager 300. VC manager 300, based on the data packet content, allocates at least a portion of queue resources coupled to endpoint 112 and/or switch element 114 to support a virtual channel of a given type.

VC manager 300, as will be explained in more detail below, initializes and possibly transforms one or more commonly supported virtual channels on point-to-point communication link 101 if adequate queue resources exist to allocate at least a portion of the queue resources coupled to endpoint 112 and/or switch element 114 to the commonly supported virtual channels. VC manager 300 then maps data traffic classes to the one or more initialized virtual channels and routes subsequent data traffic classes through the one or more initialized and mapped virtual channels.

In this regard, VC manager 300 invokes an instance of initialization feature 312 to read received data packet content transmitted between endpoint 112 and switch element 114 on point-to-point communication link 101. Initialization feature 312, based on the received data packet content populates a temporary virtual channel resource table, e.g. maintained in memory 330, with the virtual channel resources indicated by endpoint 112 and switch element 114. As introduced above and explained in more detail below, such virtual channel resources may be the number of BVC, OVC and/or MVC that endpoint 112 and switch element 114 supports on point-to-point communication link 101.

Once the temporary virtual channel resources table is populated by initialization feature 312, allocation engine 310 invokes an instance of transformation feature 316. Transformation feature 316 accesses the virtual channel resource table and compares the virtual channel resources endpoint 112 and switch element 114 indicated supporting. Based on the comparison, transformation feature 316, as explained in more detail below, may transform uncommonly supported virtual channel types, that is, virtual channel types supported by one or the other of endpoint 112 or switch element 114, but not both, to facilitate the most efficient use of queue resources on point-to-point communication link 101.

Initialization feature 312, based, at least in part, on the results of the initialization and possible transformation of virtual channel types on point-to-point communication link 101, populates an initialized virtual channel table, e.g., temporarily maintained in memory 330. This table is populated with the BVC, OVC and MVC VC ID numbers for all initialized virtual channels on point-to-point communication link 101.

Allocation engine 310 then invokes an instance of map feature 314. As introduced above, map feature 314 populates a mapping table in memory 330. Map feature 314 also accesses the temporary initialized virtual channel table, e.g. maintained in memory 330. Map feature 314 then uses the two tables to map each initialized virtual channel to one or more data traffic classes on point-to-point communication link 101.

Once data traffic classes are mapped to initialized virtual channels, allocation engine 310 invokes an instance of route feature 316 to read received data packet content associated with data traffic classes subsequently transmitted on point-to-point communication link 101. Route feature 316, based on the received data packet content, then routes data traffic classes through the route previously mapped by map feature 314.

Route feature 316 may also modify data packet content prior to transmission on point-to-point communication link 101. The modified data packet content is associated with data to be transmitted through the initialized and mapped virtual channels on point-to-point communication link 101. This modification facilitates routing data transmitted through each initialized and mapped virtual channel on point-to-point communication link 101. This modification may also assist in routing the data through all subsequent point-to-point communication links between nodes the data traverses to reach its final destination.

As will be described in more detail below, the modified data packet content conforms with a communication protocol that is used by route feature 316 to facilitate the routing of data traffic classes.

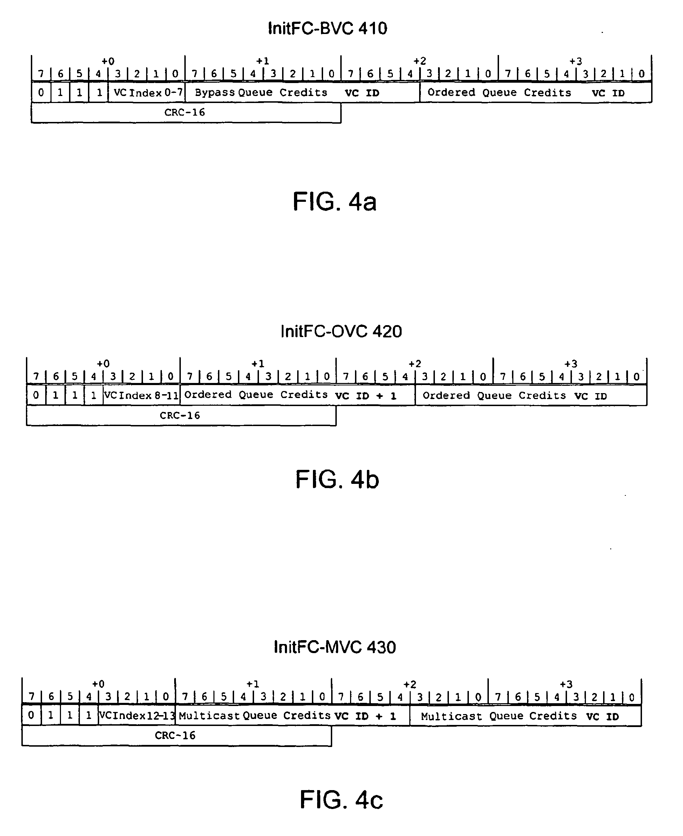

**Fig. 4a** is a graphical illustration of a BVC flow control credit initialization data link layer packet (DLLP) format, according to one embodiment of the invention. InitFC-BVC 410 is depicted comprising a 32-bit BVC initial credit DLLP format, although the invention is not limited to a 32-bit format.

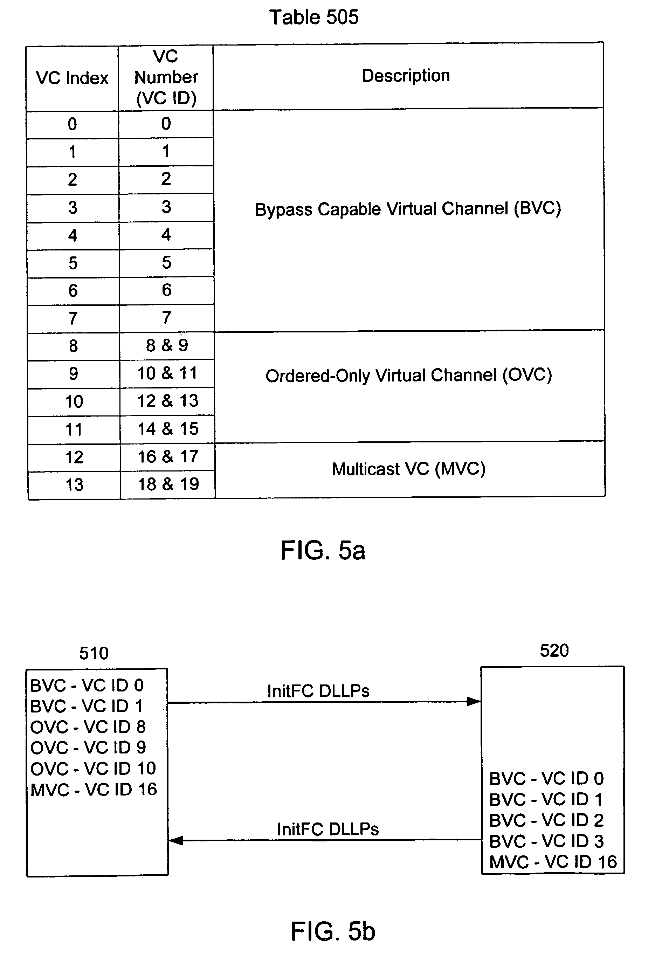

In an example embodiment, one or more InitFC-BVC 410 DLLPs are transmitted by endpoint 112 or switch element 114 to indicate support ofBVCs on point-to-point communication link 101. A InitFC-BVC 410 DLLP contains two fields to indicate BVC support for a given VC ID: a Bypass Queue Credits field and an Ordered Queue Credits field. As will be explained in more detail in Fig. 5a, the given VC ID virtual channel identifier is indicated in a third field shown as "VC index in the range 0-7" in InitFC-BVC 410.

As mentioned previously, in order to support a BVC, both endpoint 112 and switch element 114 need adequate queue resources to support both a bypass and an ordered queue on point-to-point communication link 101. Therefore, by serving as an advertisement of bypass and ordered queue depths or capacities, a non-zero value within both the Bypass Queue and Ordered Queue Credits fields of each InitFC-BVC 410 DLLP indicates a BVC is supported for the given virtual channel identifier on point-to-point communication link 101.

VC manager(s) 116 reads a received DLLP transmitted from endpoint 112 to switch element 114 and based on the contents of the received DLLP, determines whether endpoint 112 supports a BVC on point-to-point communication link 101 for a given virtual channel identifier and if so, may initialize and map that virtual channel to a given data traffic class for subsequent data transmitted on point-to-point communication link 101.

**Fig. 4b** is a graphical illustration of an OVC flow control credit initialization DLLP format, according to one embodiment of the invention. In Fig. 4b, an InitFC-OVC DLLP is depicted as InitFC-OVC 420.

In an example embodiment, one or more InitFC-OVC 420 DLLPs are transmitted by endpoint 112 or switch element 114 to indicate support of OVCs on point-to-point communication link 101. The InitFC-OVC 420 DLLPs each contain two fields to indicate OVC support for two virtual channels of given VC IDs at a time. As will be explained in more detail in Fig. 5a, the given VC IDs are indicated in a third field shown as "VC index 8-11" in InitFC-OVC 420.

By serving as an advertisement of ordered queue depth or capacity, a non-zero value within the Ordered Queue Credit fields of each InitFC-OVC 420 DLLP indicates an OVC is supported for the given virtual channel identifier on point-to-point communication link 101.

VC manager(s) 116, based, at least in part, on the above determinations, may initialize an identified virtual channel on point-to-point communication link 101 and map a given data traffic class to the initialized virtual channel for subsequent data transmitted on point-to-point communication link 101.

**Fig. 4c** is a graphical illustration of an MVC flow control credit initialization DLLP format, according to one embodiment of the invention. In Fig. 4c, an InitFC-MVC DLLP is depicted as InitFC-MVC 430.

In an example embodiment, one or more InitFC-MVC 430 DLLPs are transmitted by endpoint 112 or switch element 114 to indicate support of MVCs on point-to-point communication link 101. The InitFC-MVC 430 contains two fields to indicate MVC support for two virtual channels of given VC IDs at a time. As will be explained in more detail in Fig. 5a, the given VC IDs are indicated in a third field shown as "VC index 12-13" in InitFC-MVC 430.

By serving as an advertisement of multicast queue depth or capacity, a non-zero value within the Multicast Queue Credit fields of each InitFC-MVC 430 DLLP indicates a MVC is supported for the given virtual channel identifier on point-to-point communication link 101.

VC manager(s) 116, based, at least in part, on the above determinations, initialize, as appropriate, one or more of the identified virtual channels on point-to-point communication link 101 and map a given data traffic class to the initialized virtual channel for subsequent data transmitted on point-to-point communication link 101.

**Fig. 5a** is a graphical illustration of a relationship between virtual channel index (VC Index) and virtual channel identification number (VC ID), according to one embodiment. Table 505 depicts entries for matching VC Index values with VC IDs and virtual channel types.

In an example embodiment, table 505 shows assignments for given VC ID(s) to a VC Index and further shows assignments for a range of VC Indexes to either a BVC, OVC or MVC configuration, although the invention is not limited in this regard.

In one embodiment, table 505 is temporarily stored in a memory accessible to VC manager 300 and is used by VC manager 300 to initialize virtual channels of a given type on point-to-point communication link 101.

In alternative embodiments, since the DLLP formats of InitFC-OVC 420 and InitFC-MVC 430 allow for transfer of queue credit information for two VC IDs per VC Index, a 4-bit VC Index with 16 possible VC Index values facilitates the initialization of more than the 20 VC IDs shown in table 505. Additionally, the invention is not limited to a 4-bit VC Index value, thus larger bit values may result in even a higher # of VC IDs.

**Fig. 5b** is a graphical illustration of exchanging flow control credit initialization DLLPs between two nodes, according to one embodiment. Nodes 510 and 520 are shown in Fig. 5b as each indicating adequate queue resources for six and five virtual channels respectively. Node 510 indicates support for VC IDs 0, 1, 8, 9, 10 and 16, while node 520 indicates support for VC IDs 0, 1, 2, 3 and 16.

According to an example embodiment, node 510 transmits to node 520 flow control initialization DLLPs with a non-zero credit value in the appropriate queue credit fields, at least one DLLP being associated with each supported virtual channel. When following the VC ID assignments listed in table 505, Node 510 transmits to Node 220 5 DLLPs with non-zero credit values for VC IDs 0, 1, 8, 9, 10 and 16 (since VC IDs 8 & 9 will be transmitted by the same DLLP with VC Index 8, see table 505). Node 520 will also transmit to node 510 at least 5 DLLPs with a non-zero credit value for VC IDs 0, 1, 2, 3 and 16. Thus, in this example embodiment, based on the content of the exchanged flow control initialization DLLPs only VC IDs 0, 1 and 16 are commonly supported by nodes 510 and 520. Consequently, VC IDs 0, 1, and 16 may be initialized on the point-to-point communication link between nodes 510 and 520 in order to transmit/receive data through these virtual channels on the point-to-point communication link.

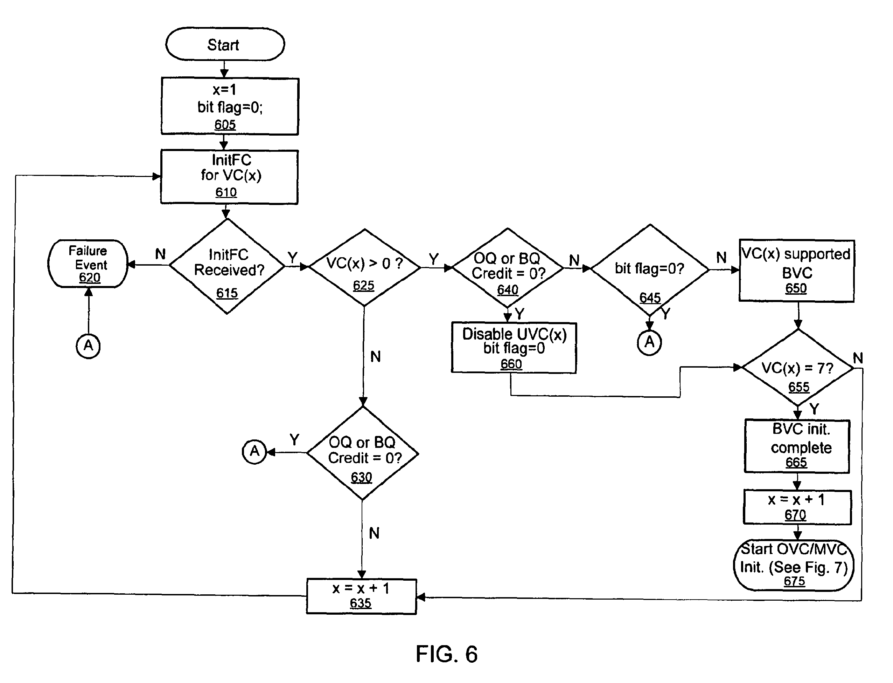

**Fig. 6** is a flow chart of a method to perform BVC initialization, according to one embodiment. In this example embodiment, one or more virtual channels are being initialized on point-to-point communication link 101. In that regard, the process begins with block 605 wherein a state machine variable "x" (hereinafter denoted as the x in VC(x)) is equal to 0. In an example embodiment, the state machine variable is used to track the correct ordering of the VC Index (see table 505) of each received DLLP. Thus, x equal to 0 in VC(x) corresponds to a VC Index value of 0.

Also in block 605, a bit flag is asserted or equal to 1. The bit flag may be stored in a memory register accessible to VC manager(s) 116. The bit flag is used to signal support for a given virtual channel on point-to-point communication link 101. Thus, an assertion of the bit flag signals that VC(x) is a potentially supportable virtual channel on point-to-point communication link 101 and up to this given period of time, nothing indicates otherwise.

The process then moves to block 610, wherein a DLLP in the format of InitFC-BVC 410 is transmitted by endpoint 112 on point-to-point communication link 101.

The process then moves to block 615, wherein control logic 320 of VC manager 300 invokes an instance of allocation engine 310. In response to control logic 320, allocation engine 310 invokes an instance of initialization feature 312. Initialization feature 312 determines whether the InitFC-BVC DLLP for VC(x) has been received by switch element 114.

If initialization feature 312 determines that no InitFC-BVC DLLP for VC(x) has been received by switch element 114, the process moves to block 620.

In block 620, a rule may be implemented to facilitate the sequential initialization of VC IDs. This rule states that initialization flow control credit DLLPs be received at endpoint 112 or switch element 114 in sequential order and if received out of sequence, a failure event results. Thus, if initialization feature 312 determines that a DLLP for VC(x) is not received by switch element 114, a failure event has resulted and the initialization process ends.

In block 620, if initialization feature 312 determines that an InitFC-BVC DLLP for VC(x) has been received by switch element 114, the process moves to block 625. In block 625, initialization feature 312 determines whether or not VC(x) is greater than 0.

If initialization feature 312 determines that VC(x) is not greater than 0, the process moves to block 630. In block 630, initialization feature 312 reads the Bypass Queue Credits and Ordered Queue Credits fields of the InitFC-BVC DLLP for VC(x) to determine whether either field contains a value of 0. A value of 0 indicates that one or both types of queues are not supported by endpoint 112, and as mentioned above, both types of queues are required to support a BVC. Thus, a value of 0 in either the Bypass Queue Credits or Ordered Queue Credits fields indicates that a bypass capable virtual channel is not supported by endpoint 112 for VC(x).

If initialization feature 312 determines that a value of 0 is present, the process moves to circle A, which corresponds with block 620.

In block 620, according to an example embodiment, another rule may be implemented to facilitate the sequential initialization of VC IDs. This rule requires any higher numbered VC ID for BVC supportable virtual channels (#'s 0-7, see table 505) to have a value of 0 in the Bypass and Ordered Queue Credit fields for all transmitted InitFC-BVC DLLPs if a lower numbered BVC supportable virtual channel is found as unsupported on point-to-point communication link 101. Thus, if VC ID = 0, a 0 value in the Bypass or Ordered Queue Credit fields indicates non-support of a virtual channel on point-to-point communication link 101. An indication of non-support conflicts with a bit flag = 1, which as stated previously, signals no detected unsupported virtual channels on point-to-point communication link 101. Accordingly, initialization feature 312 indicates that a failure event has occurred in initializing virtual channels on point-to-point communication link 101 and the initialization process ends.

If initialization feature 312 determines that a 0 value is not present, the process moves to block 635. In block 635, initialization feature 312 increments VC(x) by one. Thus, the initialization process is complete for the virtual channel corresponding with VC Index = 0. The process then returns to block 610.

In block 625, if initialization feature 312 determines the VC(x) is not equal to 0, the process moves to block 640. In block 640, initialization feature 312 reads the Bypass Queue Credits and Ordered Queue Credits fields of the InitFC-BVC DLLP to determine whether either field contains a value of 0.

If initialization feature 312 determines that a value of 0 is not present in the Bypass and Ordered Queue Credit fields, the process moves to block 645. In block 645, initialization feature 312 accesses the bit flag (e.g. stored in memory 330) and determines whether the bit flag is de-asserted (bit flag = 0), which, as mentioned previously, signals that VC(x) has found indications of non-support on point-to-point communication link 101.

If initialization feature 312 determines that the bit flag = 0, the process moves to circle A which corresponds with block 620. In block 620, as mentioned previously, a conflict exists; resulting in a failure event and the initialization process ends.

If initialization feature 312 determines the bit flag = 1 (asserted), the process moves to block 650. In block 650 it is determined that a BVC is supported by endpoint 112 on point-to-point communication link 101 for VC(x). The process then moves to block 655.

In block 640, if initialization feature 312 determines that a value of 0 is present in the Ordered or Bypass Queue Credit fields, the process moves to block 660. In block 660, initialization feature 312 de-asserts the bit flag to signal endpoint 112's lack of support for a BVC corresponding to VC(x). The process then moves to block 655.

In block 655, initialization feature 312 determines whether the value of VC(x) is equal to 7. If initialization feature 312 determines the value is not equal to 7, the process moves to block 635.

In block 635, initialization feature 312 increments VC(x) by one. Thus, initialization is complete for that particular virtual channel. The process then returns to block 610.

If initialization feature 312 determines the value is equal to 7, the process moves to block 665. In block 665, since all eight VC ID numbers assigned to support BVCs (see table 505) have been found to be either supported or unsupported by endpoint 112, the BVC initialization process is complete. The process then moves to block 670.

In block 670, initialization feature 312 increments VC(x) by one. Accordingly, VC(x) now indicates a VC Index and VC ID of at least 8. The process then moves to block 675.

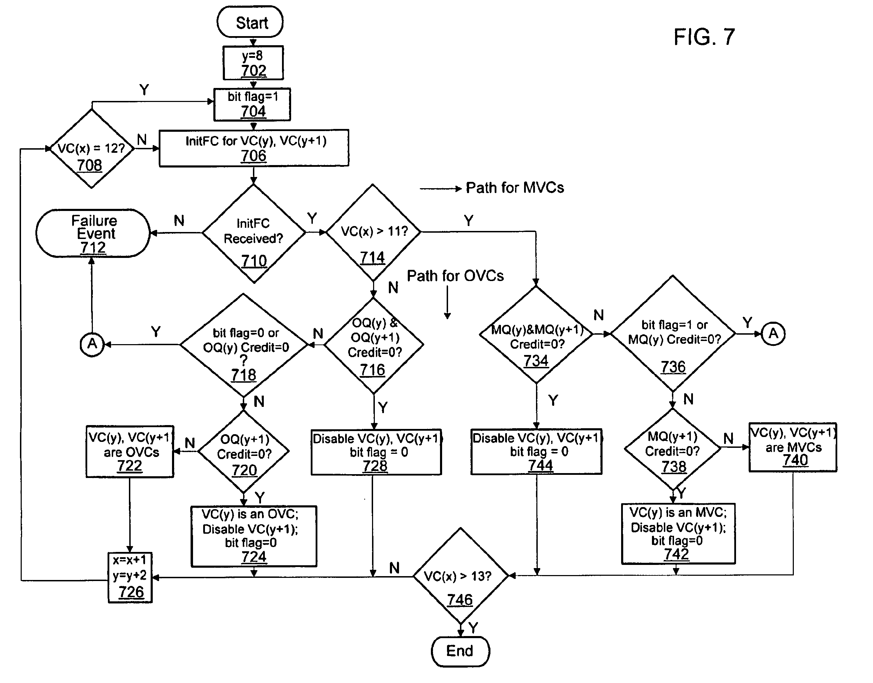

In block 675, the process to initialize OVCs and/or MVCs is started since as illustrated in table 505, VC Index values of greater than 7 correspond to OVCs and MVCs. The process then moves to Fig. 7.

**Fig. 7** is a flow chart of a method to perform OVC and MVC initialization, according to one embodiment. In Fig. 7, the process is carried on from that of Fig. 6 and begins with block 702.

In block 702, y represents the VC ID number corresponding to a given VC Index value as illustrated in table 505. In this example embodiment, y = 8, since VC IDs 0-7 previously completed the initialization process described in Fig. 6. Further, since InitFC-OVC and InitFC MVC DLLPs indicate queue resources to initialize two virtual channels at a time, each VC ID is denoted in Fig. 7 as y and y +1. Additionally, the VC Index is also 8 since the process in Fig. 7 is a continuation of the process described in Fig. 6. Consequently the state machine variable "x" in VC(x) is equal to 8. The process then moves to block 704.

In block 704, as mentioned previously, a bit flag equal to 1 signals that VC(x) is potentially supportable on point-to-point communication link 101.

The process then moves to block 706, wherein one or more DLLPs using the format of InitFC-OVC 420 are transmitted by endpoint 112 on point-to-point communication link 101 to switch element 114.

The process then moves to block 710, wherein initialization feature 312 determines whether the InitFC-OVC DLLP for initializing VC(x) on point-to-point communication link 101 has been received by switch element 114.

If initialization feature 312 determines that no InitFC-OVC DLLP for VC(x) has been received by switch element 114, the process moves to block 712. In block 712, as described previously in Fig. 6, a failure event has occurred in initializing virtual channels on point-to-point communication link 101 and the initialization process ends.

If initialization feature 312 determines that an InitFC-OVC DLLP for VC(x) has been received by switch element 114, the process moves to block 714. In block 714, initialization feature 312 determines whether or not VC(x) is greater than 11. A VC(x) of 8-11 indicates an OVC is being initialized and a VC(x) equal to 12 or 13 indicates a MVC is being initialized. This is illustrated in table 505.

If initialization feature 312 determines that VC(x) is not greater than 11, the process moves to block 716. In block 716, initialization feature 312 reads the Ordered Queue Credit fields for both VC ID = y (e.g. VC ID = 8) and for VC ID = y + 1 (e.g. VC ID = 9) to determine whether both fields contain a 0 value.

In an example embodiment, a 0 value in the Ordered Queue Credit fields for VC ID = y and for VC ID = y + 1 indicates that an OVC is not supported by endpoint 112 for those respective virtual channels.

If initialization feature 312 determines that both fields do not contain a value of 0, the process moves to block 718. In block 718, initialization feature 312 accesses the bit flag for VC(x) and determines whether the bit flag is de-asserted (bit flag = 0) or whether the Ordered Queue Credits field for VC ID = y indicates a value of 0.

If initialization feature 312 determines the bit flag = 0 or a value of 0 for the Ordered Queue Credits is indicated, the process moves to circle A which corresponds with block 712. In block 712, as mentioned previously in Fig. 6, a failure event has occurred and the initialization process is ended. A bit flag = 0 is a failure since it indicates that an OVC is not supported by either VC ID = y or VC ID = y + 1 and this conflicts with the non-zero value in the Ordered Queue Credits fields for VC ID = 8 and VC ID = 9 as determined in block 734.

According to an example embodiment, a rule may be implemented to facilitate the sequential initialization of OVC capable VC IDs on point-to-point communication link 101. This rule may require any higher numbered VC IDs for OVC virtual channels found unsupported on the point-to-point communication link to have a value of 0 for the Ordered Queue Credit fields for all transmitted InitFC-OVC DLLPs if a lower numbered OVC supportable virtual channel is detected as unsupported. Thus, in the example embodiment, VC ID = y is a lower number then VC ID = y + 1. Consequently, a 0 value for VC ID = y and a non-zero value for VC ID = y + 1 violates the above mentioned rule and results in a failure event.

In block 718, if initialization feature 312 does not determine that the bit flag = 0, or an Ordered Queue Credit value of 0 for VC ID = y, the process moves to block 720. In block 720, initialization feature 312 determines whether the Ordered Queue Credits for VC ID = y + 1 is equal to zero.

If initialization feature 312 determines that VC ID = y + 1 does not have an Ordered Queue Credit value equal to 0, the process moves to block 722. In block 722, it is determined that an OVC is supported by endpoint 112 on point-to-point communication link 101 for both VC ID = y and y + 1. The process then moves to block 726.

If initialization feature 312 determines that VC ID = y + 1 has an Ordered Queue Credit value equal to 0 the process moves to block 724. In block 724, it is determined that an OVC is supported by endpoint 112 for VC ID = y and that an OVC is not supported by endpoint 112 for VC ID = y + 1.

As mentioned previously, a rule may be implemented to facilitate the sequential initialization of OVC capable VC IDs on point-to-point communication link 101. In this regard, since VC ID = y + 1 had a value of 0 in the Ordered Queue Credits field, all higher numbered OVC capable virtual channels must be disabled. Thus, initialization feature 312 de-asserts the bit flag for VC ID = y + 1 to signal that particular VC ID is disabled and also de-asserts the bit flag for all higher numbered OVC capable virtual channels on point-to-point communication link 101. The process then moves to block 726.

In block 716, if initialization feature 312 determines a value of 0 for the Ordered Only Queue fields of VC ID = y and VC ID = y + 1, the process moves to block 728.

In block 728, it is determined that an OVC is not supported for either VC ID = y or VC ID = y + 1 since as mentioned previously, a 0 value in the Ordered Queue Credit fields for VC ID = y and for VC ID = y + 1 indicates that an OVC is not supported by endpoint 112 on point-to-point communication link 101.

Also as mentioned previously, in an example rule implementation, all higher number OVC capable VC IDs are disabled on point-to-point communication link 101. Thus, initialization feature 312 accesses the bit flag (e.g. in memory 330) and de-asserts the bit flag for all OVC capable virtual channels on point-to-point communication link 101. The process moves to block 726.

In block 714, if initialization feature 312 determines VC(x) is greater than 11, the process moves to block 734. As mentioned previously, a VC Index value of 12 or 13 indicates that a MVC is being initialized (see table 505). Thus, in block 734, initialization feature 312 would read one or more DLLPs transmitted by endpoint 112 on point-to-point communication link 101 using the format of InitFC-MVC 430. Therefore, initialization feature 312 reads both Mulitcast Queue Credit fields of InitFC-MVC 430 DLLP for VC(x), which as mentioned previously correspond to VC IDs y and y +1.

If initialization feature 312 determines that both Multicast Queue Credit fields do not have a value of 0, the process moves to block 736. In block 736, initialization feature 312 accesses the bit flag for VC(x) (e.g. in memory 330) and determines whether the bit flag = 0. Initialization feature 312, based on its reading of the Multicast Queue Credits field for the VC ID = y also determines whether the field indicates a value of 0.

If initialization feature 312 determines the bit flag = 0 or a value of 0 for the Multicast Queue Credit field for VC ID = y, the process moves to circle A which corresponds with block 712. In block 712, a failure event has occurred and the initialization process is ended. A bit flag = 0 is a failure since it indicates that an MVC is not supported by endpoint 112 for either of the two VC IDs and this conflicts with a non-zero value in the Multicast Queue Credits fields for both VC IDs as found in block 734.

Additionally, according to an example embodiment, a rule may be implemented to facilitate the sequential initialization of MVC capable virtual channel IDs. This rule may requires any higher numbered VC IDs for MVC capable virtual channels found unsupported on point-to-point communication link 101, to have a value of 0 for the Multicast Queue Credit fields for all transmitted InitFC-MVC DLLPs on point-to-point communication link 101 if a lower numbered MVC capable virtual channel is detected as unsupported. Thus, in the example embodiment, VC ID = y is a lower number then VC ID = y + 1. Consequently, a 0 value for VC ID = y and a non-zero value for VC ID = y + 1 violates the above mentioned rule and results in a failure event.

In block 736, if initialization feature 312 does not determine the bit flag = 0, or a Multicast Queue Credit value of 0 for VC ID = y, the process moves to block 738. In block 738, initialization feature 312 determines whether the Mulitcast Queue Credit value for VC ID = y + 1 is equal to 0.

If initialization feature 312 determines that VC ID = y + 1 does not have a Mulitcast Queue Credit value equal to 0, the process moves to block 740. In block 740, it is determined that a MVC is supported by endpoint 112 on point-to-point communication link 101 for both VC ID = y and VC ID = y + 1. The process then moves to block 746. [00101] In block 734, if initialization feature 312 determines that VC ID = y and VC ID = y + 1 have a Multicast Queue Credit value equal to 0, the process moves to block 744. In block 744, it is determined that a MVC is not supported by endpoint 112 for VC ID = y and VC ID= y+1.

As mentioned previously, in an example rule implementation, since VC ID = y and VC ID = y + 1 have a value of 0 in the Mulitcast Ordered Queue Credits field, all higher number MVC capable VC IDs must be disabled on the point-to-point communication link. Thus, initialization feature 312 accesses the bit flag for VC(x) (e.g. in memory 330) and de-asserts the bit flag for all MVC VC IDs corresponding to a VC Index value equal to and greater than VC(x) (see table 505) and the process moves to block 746.

In block 746, initialization feature 312 determines whether VC(x) is equal to 13.

If initialization feature 312 determines that VC(x) is equal to 13, the initialization process ends. Thus, according to the example embodiment illustrated in table 505, the initialization process ends for all BVCs, OVCs and MVCs on point-to-point communication link 101 after a VC(x) value of 13.

If initialization feature 312 determines that VC(x) is not equal to 13 the process moves to block 726.

In block 726, according to an example embodiment, initialization feature 312 increments VC(x) by 1. As illustrated by table 505, incrementing VC(x) by one also results in the incrementing variable "y" (associated with VC ID numbers) by a value of two. The process then moves to block 708.

In block 708, initialization feature 312 determines whether VC(x) is equal to 12.

If initialization feature 312 determines VC(x) is equal to 12, the process moves to block 704. In block 704, initialization feature 312 may assert the bit flag if the bit flag had been previously de-asserted to signal non support for one or more OVC capable virtual channels. Thus, VC(x) values of 12 and greater can be initialized without generating a failure event. The process then continues with block 706 for possible initialization of MVCs for VC(x) values of 12 or greater.

If initialization feature 312 determines the value is not equal to 12, the process continues with block 706 for the possible initialization of at least one more OVC.

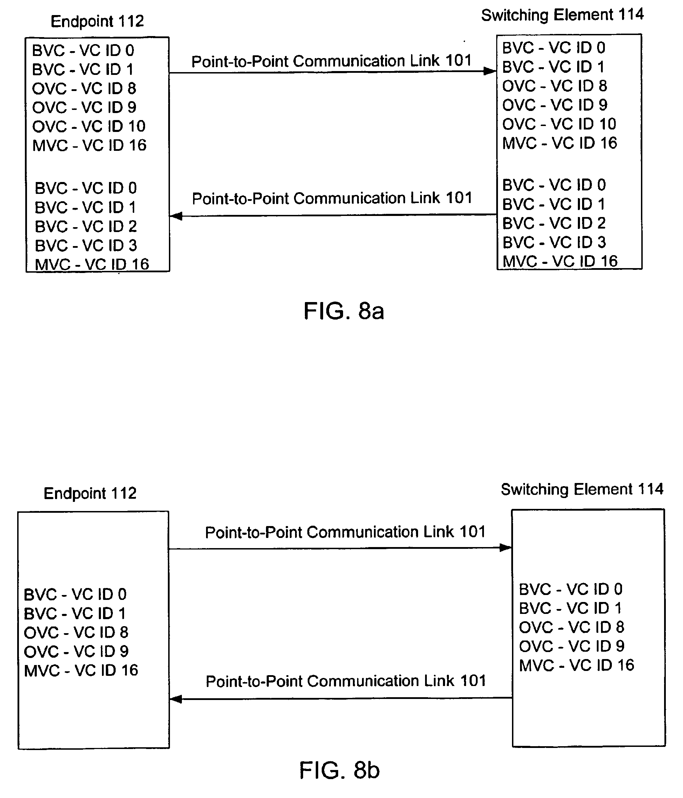

**Fig. 8a** is a graphical illustration of a point-to-point communication link, showing supported virtual channels between two nodes, according to one embodiment of the present invention. In accordance with the illustrated example embodiment of Fig. 8a, endpoint 112 and switch element 114 are depicted.

In an example embodiment, the initialization process for initializing BVCs, OVCs and MVCs supported by endpoint 112 and switch element 114 on point-to-point communication link 101 has been completed as described in the process illustrated in Fig. 6 and Fig. 7. In Fig. 8a, endpoint 112 is shown as supporting two BVCs, three OVCs and one MVC and switch element 114 is shown as supporting four BVCs and one MVC on point-to-point communication link 101.
In one embodiment, the number of virtual channels supported on point-to-point communication link 101 corresponds to the smallest number of commonly supported virtual channels for a given type of virtual channel. In Fig. 8a, endpoint 112 supports only two BVCs while switch element 114 supports four BVCs. Thus, only two BVCs are commonly supported on point-to-point communication link 101. Accordingly, the resources for the two other BVCs supported by switch element 114 are not utilized, unless they are transformed to an OVC.

Transforming uncommonly supported BVCs to OVCs facilitates a more efficient use of allocated queue resources in switch element 114. This is possible since the difference between a BVC, as illustrated in Fig. 2a, and an OVC, as illustrated in Fig. 2b, is that the BVC has an additional FIFO queue that provides for some data traffic classes to be bypassed by other data traffic classes within the same virtual channel. Thus, in an example embodiment, a BVC can operate as an OVC by not utilizing this bypass FIFO queue.

**Fig. 8b** is a graphical illustration of resource allocation of virtual channels between two nodes, according to one embodiment. Endpoint 112 and switch element 114 are depicted as allocating queue resources to support 5 VC IDs on point-to-point communication link 101.

As introduced above, under-utilized BVCs may be transformed into OVCs. In an example embodiment, the transformation is performed by VC manager(s) 116, wherein control logic 320 invokes an instance of allocation engine 310. In response to control logic 320, allocation engine 310 invokes an instance of transformation feature 318.

As mentioned above for Fig. 8a, the lowest number of commonly supported BVCs between endpoint 112 and switch element 114 is two. Transformation feature 318 transforms the two not supported BVCs to OVCs to facilitate the efficient use of queue resources by switch element 114.

Transformation feature 318 determines what OVC VC ID number to use, once a BVC is transformed to an OVC, based on the two lowest numbered OVCs for endpoint 112 initialized during the process described in Fig 7. As a result, the two BVCs in switch element 114 not supported by endpoint 112 are transformed into the two lowest OVC virtual channel numbers supported by switch element 114.

Transformation feature 318 then transforms the two highest numbered BVCs for switch element 114 discovered during the initialization process described above, although the invention is not limited in this regard. As a result, as shown in Fig. 8a, BVC - VC ID's 2 and 3 are transformed to OVC - VC ID's 8 and 9 by transformation feature 318. Thus, OVC - VC ID 8 and OVC - VC ID 9 are now commonly supported by switch element 114 and endpoint 112 and queue resources are allocated accordingly when those VC IDs are initialized on point-to-point communication link 101.

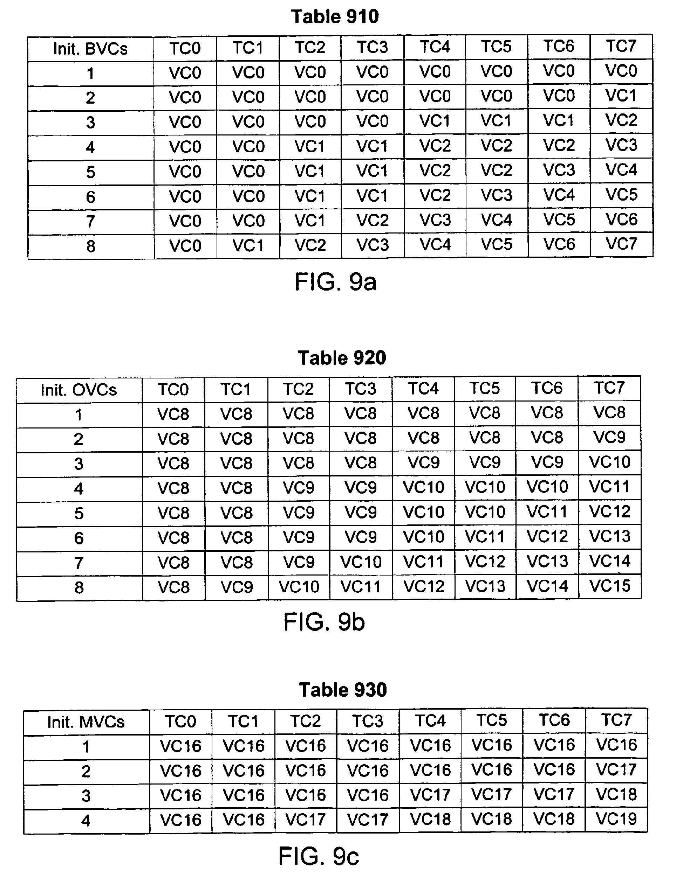

**Fig. 9a** is a table illustration of data traffic class to virtual channel mapping for initialized BVCs, according to one embodiment. Table 910 depicts a map scheme for the mapping of initialized BVCs to data traffic classes on a point-to-point communication link between two nodes.

**Fig. 9b** is a table illustration of data traffic class to virtual channel mapping for initialized OVCs, according to one embodiment. Table 920 depicts a map scheme for the mapping of initialized OVCs to data traffic classes on a point-to-point communication link between two nodes.

**Fig. 9c** is a table illustration of data traffic class to virtual channel mapping for initialized MVCs, according to one embodiment. Table 930 depicts a map scheme for the mapping of initialized MVCs to data traffic classes on a point-to-point communication link between two nodes.

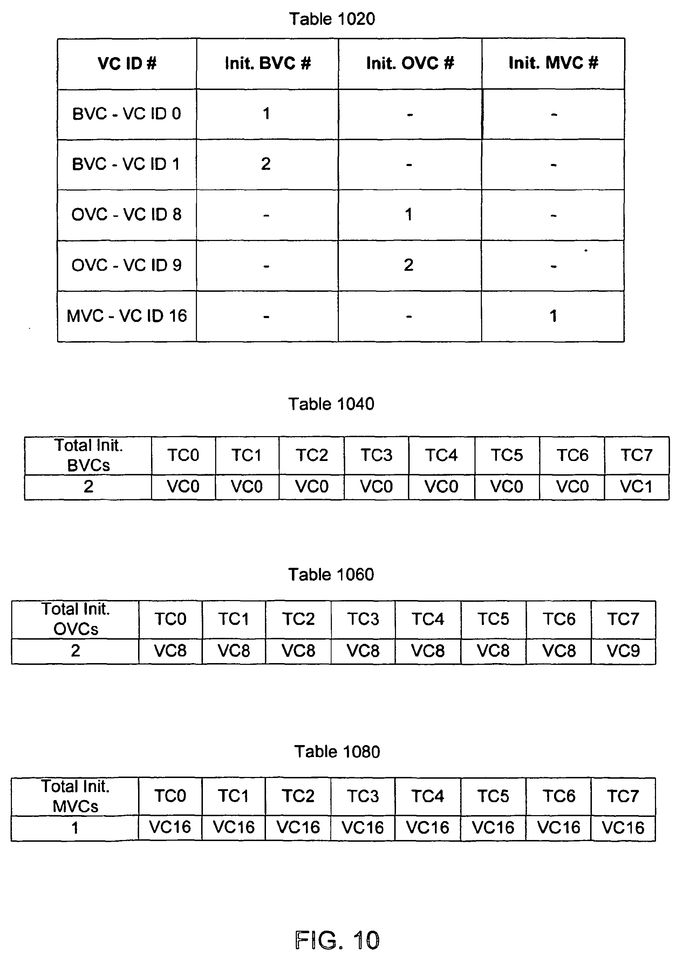

**Fig. 10** is a graphical illustration of initialized and transformed virtual channels, according to one embodiment. Table 1020, table 1040, table 1060 and table 1080 are depicted as examples of how initialized virtual channels of a given type are mapped to data traffic classes.

In accordance with the embodiments explained in Figs. 8a and 8b, two BVCs, two OVCs and one MVC have been initialized for point-to-point communication link 101 and the results entered into an initialized and transformed active virtual channel table, e.g. temporarily maintained in memory 330.

In response to control logic 320, allocation engine 310 selectively invokes an instance of map feature 314. Map feature 314, in an example embodiment, populates a mapping table, e.g. temporarily maintained in memory 330, with the BVC, OVC and MVC data traffic class to virtual channel mappings shown in tables 910, 920 and 930. Map feature 314 may then access the initialized and transformed virtual channel table and determine the number of initialized and/or transformed virtual channels for each BVC, OVC and MVC on point-to-point communication link 101.

Map feature 314 then maps the initialized BVC(s), OVC(s) and MVC(s) following the mapping schemes illustrated in tables 910, 920 and 930 for two initialized BVCs, two initialized OVCs and one initialized MVC. Accordingly, this mapping is shown in tables 1040, 1060 and 1080, although the invention is not limited in this regard.

Map feature 314 then places the mapped values for the two initialized BVCs, two initialized OVCs and one initialized MVC in a temporary table, e.g. maintained in memory 330, which as explained in more detail below, is used by route feature 316 to route data traffic classes through the virtual channels on point-to-point communication link 101.

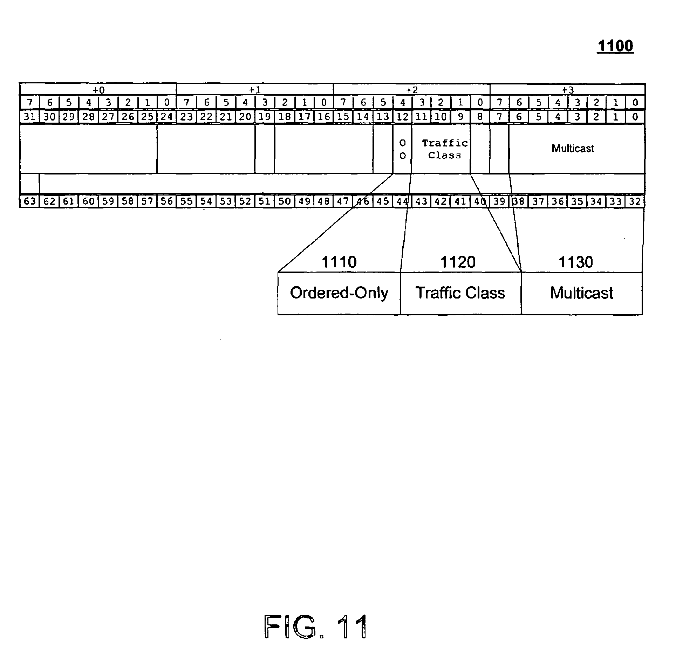

**Fig. 11** is a graphical illustration of a route header packet format, according to one embodiment. A router header 1100 is depicted as comprising three fields: an ordered-only 1110; data traffic class 1120; and multicast 1130. Ordered-only 1110, data traffic class 1120, and multicast 1130, facilitate the efficient routing of data traffic classes over a point-to-point communication link between two nodes. In route header 1100, multicast 1130 is contained within bits 0-6, data traffic class 1120 is contained within bits 9-11 and ordered only 1110 is contained within bit 12.

The de-assertion of bits 0-6 in multicast 1130 corresponds to a MVC.

The selective assertion of bits 9-11 in traffic class 1120 corresponds to up to eight different data traffic classes by selectively asserting a combination of bits 9-11.

The assertion of bit 12 in ordered-only 1110 corresponds to an OVC and a de-assertion corresponds to a BVC.

In an example embodiment, at least a portion of route header 1100 is modified to facilitate the routing of data traffic classes through initialized and mapped virtual channel. In this regard, VC manager 300 invokes and instance of route feature 316 to modify route header 1100 by selectively asserting bit 12 and/or at least one bit of bits 0-6.

In an example embodiment, route feature 316 may modify route header 1100 to facilitate the routing of data traffic classes from a source node to a destination node through the initialized and mapped virtual channels on point-to-point communication link 101.

Route feature 316 de-asserts bits 0-6 if the data traffic class is to be routed to a MVC or selectively assert bit 12 and assert at least one bit of bits 0-6 if the data traffic classes are to be routed through either a BVC or an OVC.

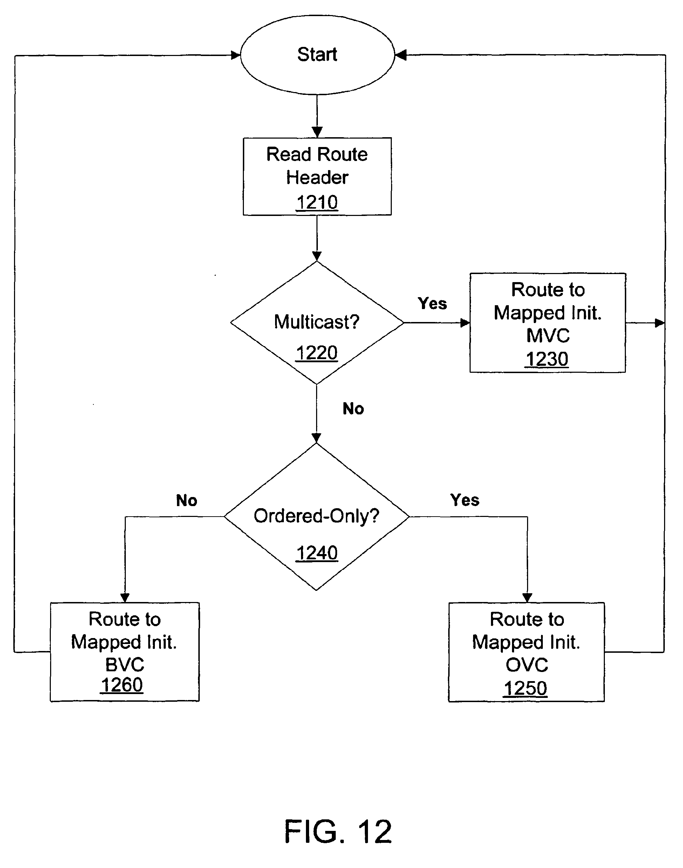

**Fig. 12** is a flow chart of a method to route data through a virtual channel, according to one embodiment. The process begins with block 1210, wherein route header 1100 is read by VC manager 300.

In this example embodiment, route header 1100 is associated with a particular data traffic class to be routed through point-to-point communication link 101 which has been initialized and mapped by the processes previously described.

In response to control logic 320, allocation engine 310 invokes an instance of route feature 316. Route feature 316, reads data traffic class 1120 and multicast 1130 of route header 1100.

Once data traffic class 1120 and multicast 1130 is read by route feature 316, the process moves to block 1220. In block 1220, route feature 316, determines whether at least one bit of bits 0-6 of multicast 1130 is asserted.

If at least one bit of multicast 1130 is not asserted, the process moves to block 1230. In block 1230, all initialized and transformed active MVCs on point-to-point communication link 101 have been mapped as shown in table 1080. Route feature 316 accesses the mappings, temporarily stored in memory by map feature 314, as explained above. Route feature 316 then routes the data traffic class through the appropriate virtual channel on point-to-point communication link 101 according to the mappings in table 1080 Thus, for example, data traffic class 1120 indicates a data traffic class of 7 (i.e. bits 8-11 are all asserted). Route feature 316, would then route data traffic class 7 through VC ID 16 as shown in table 1080. The process then starts over.

If at least one bit of multicast 1130 is asserted, the process moves to block 1240. In block 1240, route feature 316, reads ordered-only 1110 and determines whether bit 12 is asserted.

In block 1240, if bit 12 is asserted, the process moves to block 1250. In block 1250, route feature 316 accesses the mappings, temporarily stored in memory by map feature 314, as explained above. Route feature 316 then routes the data traffic classes through the appropriate virtual channel on point-to-point communication link 101 according to the mappings shown in table 1060. The process then starts over.

In block 1240, if bit 12 is de-asserted, the process moves to block 1260. In block 1260, route feature 316, accesses the mappings, temporarily stored by map feature 314, as explained above. Route feature 316 then routes the data traffic classes through the appropriate virtual channel on point-to-point communication link 101 according to the mappings in table 1040. The process then starts over.

Referring again to the block diagram of **Figure 1** where electronic system 100 may be a server, a switch, a bridge or a switch fabric for a communication network, although the invention is not limited to these embodiments.

In accordance with one embodiment, system control logic 104 controls the overall operation of electronic system 100 and is intended to represent any of a wide variety of logic device(s) and/or executable content to implement the operation of electronic system 100, described herein. In this regard, system control logic 104 may well be comprised of a microprocessor, network processor, microcontroller, FPGA, ASIC, executable content to implement such control features and/or any combination thereof.

Electronic system 100 also includes system memory 106 to store information/features offered by electronic system 100. In this regard, system memory 106 may also be used to store temporary variables or other intermediate information during execution of instructions by system control logic 104. As used herein, system memory 106 may well include a wide variety of memory media including but not limited to volatile memory, non-volatile memory, flash, programmable variables or states, random access memory (RAM), read-only memory (ROM), or other static or dynamic storage media.

In accordance with one embodiment, machine-readable instructions can be provided to system memory 106 from a form of machine-accessible medium. As used herein, a machine-accessible medium is intended to represent any mechanism that provides (i.e., stores and/or transmits) information in a form readable by a machine (e.g., electronic system 100). For example, a machine-accessible medium may well include ROM; RAM; magnetic disk storage media; optical storage media; flash memory devices; electrical, optical, acoustical or other form of propagated signals (e.g., carrier waves, infrared signals, digital signals); and the like. Instructions may also be provided to system memory 106 via a remote connection through system I/O interfaces 108 (e.g., over a communication network).

System I/O interfaces 108, in one embodiment couples in communication one or more element(s), e.g., system control logic 104 to communicate or interact with input and/or output devices. For example, input devices such as a mouse, keyboard, touchpad, etc. and/or output devices (e.g., cathode ray tube monitor, liquid crystal display, etc.).

Endpoint 112 represent an element(s) of electronic system 100 which may be either a source node or a destination node for data transmitted, routed and/or received within and/or remote to electronic system 100. In this regard, endpoint 112 may well comprise one or more of a bridge, network processor, embedded logic, input/output port for a switch fabric and the like.

As used, herein, switch element 114 may represent an element(s) of electronic system 100 which may act as an intermediary node for data transmitted and/or received from a source and/or destination node(s) located within and/or remote to electronic system 100. Switch element 114 may represent any of a number of hardware and/or software element(s) to receive and transmit data. Thus, in one embodiment, switch element 114 may well comprise one or more of a software application, a microprocessor, embedded logic, an intermediary switch for a switch fabric or the like.

In one embodiment, data may be transmitted through point-to-point communication link 101 in electronic system 100 from a source node to a destination node. For example, the source node may be an endpoint 112 and the destination node may be another endpoint 112 of electronic system 100. Point-to-point communication link 101 may directly connect at least two endpoints 112 in a peer-to-peer fashion or indirectly connect endpoint 112 through at least one intermediate node, such as for example switch element 114.

According to one embodiment, VC manager(s) 116 assistance in the efficient transmission of data traffic classes on point-to-point communication link 101 may well be implemented in hardware, software, firmware, or any combination thereof e.g. coupled to electronic system 100, as shown. In this regard, VC manager(s) 116 may well be implemented as one or more of an ASIC, a special function controller or processor, FPGA, or other hardware device, firmware or software to perform at least the functions described herein.

VC manager(s) 116 may be encompassed within endpoint 112 and/or switch element 114. Alternatively, VC manager(s) 116 is coupled to endpoint 112 and/or switch element 114 through e.g. communication channel 102 or through system I/O interfaces 108.

It should be appreciated that VC manager(s) 116 need not be integrated within an electronic system for the electronic system to access and benefit from the features of VC manager(s) 116. That is system I/O interfaces 108 provides a communications interface between VC manager(s) 116 and an electronic system through, e.g. a network communication channel. Thus, the remote electronic system may access and employ the features of VC manager(s) 116.

Although shown as a number of disparate functional elements, those skilled in the art will appreciate from the disclosure herein, that VC managers of greater or lesser complexity that nonetheless perform the functions/features described herein, whether implemented in hardware, software, firmware or a combination thereof, are anticipated within the scope and spirit of the invention.

In the previous descriptions, for the purpose of explanation, numerous specific details were set forth in order to provide a thorough understanding of the invention. It will be apparent, however, to one skilled in the art, that the invention can be practiced without these specific details. In other instances, structures and devices were shown in block diagram form in order to avoid obscuring the invention.

References made in the specification to "one embodiment" or "an embodiment" means that a particular feature, structure or characteristic described in connection with that embodiment is included in at least one embodiment of the invention. Thus, the appearances of the phrase "in one embodiment" appearing in various places throughout the specification are not necessarily all referring to the same embodiment. Likewise, the appearances of the phrase "in another embodiment," or "in an alternate embodiment" appearing in various places throughout the specification are not all necessarily referring to the same embodiment.

While the invention has been described in terms of several embodiments, those of ordinary skill in the art will recognize that the invention is not limited to the embodiments described, but can be practiced with modification and alteration within the scope of the appended claims. The description is thus to be regarded as illustrative of, rather than limiting the scope and coverage of the claims appended hereto.

## Claims

1. A method of managing a plurality of virtual channels on a point-to-point communication link (101) between a first node (112) and a second node (114), the first node (112) having queue resources to support at least one ordered virtual channel (220), and the second node (114) having queue resources to support at least one bypass capable virtual channel (210), said ordered virtual channel having, at least at the first node (112), queue resources to support an ordered queue (212), and said at least one bypass capable virtual channel (210) having, at least at the second node (114), queue resources to support both an ordered queue (212) and a bypass queue (214), the ordered queue (212) and the bypass queue (214) being first-in-first-out FIFO queues that support transmission of data through a bypass capable virtual channel (210) to avoid potential data deadlocks through the bypass capable virtual channel (210), the method comprising:
receiving one or more data packets (410, 420) that include content to initialize the plurality of virtual channels on the point-to-point communication link (101), the one or more data packets including an indication of queue resources of the second node (114), based on the content of the received one or more data packets (410, 420);
initializing one or more virtual channels on the point-to-point communication link commonly supported by the first and second nodes (112,114);
transforming a given bypass capable virtual channel (210) supported by the second node (114) to a given ordered virtual channel (220) supported by the first node (112);
initializing the transformed given ordered virtual channel (220), and
mapping a data traffic class to the transformed and initialized ordered virtual channel.

2. A method according to claim 1, wherein transforming the given bypass capable virtual channel (210) to a given ordered virtual channel (220) comprises assigning a given identifier to the transformed given ordered virtual channel (220) that is different than an identifier assigned to the given bypass capable virtual channel (210), wherein the given identifier corresponds to an identifier for an ordered virtual channel (220) supported by the queue resources at the first node (112).

3. A method according to claim 1, wherein the mapping of the data traffic class to the transformed and initialized given ordered virtual channel (220) comprises mapping the data traffic class to the transformed and initialized given ordered virtual channel (220) based on a mapping scheme (920).

4. A method according to claim 3, wherein the mapping scheme (920) is based on at least one statically determined entry.

5. A method according to claim 1, wherein the data traffic class comprises the data traffic class classified based on the data traffic class' level of priority as compared to other data traffic classes transmitted on the point-to-point communication link.

6. A method according to claim 3, further comprising:
receiving a given data packet on the point-to-point communication link (101) that includes content (1100) indicating that the given data packet is associated with the data traffic class; and
routing the given data packet through the transformed and initialized given ordered virtual channel (220).

7. A node (114) comprising:
queue resources to support a bypass capable virtual channel (210) on a point-to-point communication link (101) between said node (114) and a second node (112), said bypass capable virtual channel (210) having queue resources to support both an ordered queue (212) and a bypass queue (214), the ordered queue (212) and the bypass queue (214) being first-in-first-out FIFO queues that support transmission of data through a bypass capable virtual channel (210) to avoid potential data deadlocks through the bypass capable virtual channel (210); and
a virtual channel manager (300) including:
means for receiving one or more data packets (410, 420) that include content to initialize one or more virtual channels on the point-to-point communication link (101), the one or more data packets including an indication of queue resources of the node (114), based on the content of the received one or more data packets (410, 420), the virtual channel manager;
means for initializing the one or more virtual channels (210) on the point-to-point communication link commonly supported by said nodes (112,114);
means for transforming a given bypass capable virtual channel (210) supported by the node (114) to a given ordered virtual channel (220) supported by said second node (112), said ordered virtual channel (220) having at said second node (112) queue resources to support an ordered queue (212);
means for initializing the transformed given ordered virtual channel (220); and
means for mapping a data traffic class to the transformed and initialized given ordered virtual channel (220).

8. A node according to claim 7, wherein the means for transforming is arranged to assign a given identifier to the transformed given ordered virtual channel (220) that is different than an identifier assigned to the given bypass capable virtual channel (210), wherein the given identifier corresponds to an identifier for an ordered virtual channel (220) supported by the queue resources at the second node (112).

9. A node according to claim 7, wherein the means for mapping is arranged to map the data traffic class to the transformed and initialized given ordered virtual channel (220) based on a mapping scheme (920).

10. A node according to claim 7, wherein the data traffic class mapped to the transformed and initialized given virtual channel comprises a data traffic class based on a priority of the data traffic class as compared to other data traffic classes transmitted on the point-to-point communication link between nodes.

11. A node according to claim 7, wherein the virtual channel manager (300) further includes:
means for receiving a given data packet on the point-to-point communication link (101) that includes content (1100) indicating that the given data packet is associated with the data traffic class; and
means for routing the given data packet through the transformed and initialized given ordered virtual channel.

12. A system (100) comprising:
an intermediary node (114) according to any one of claims 7 to 11; and
a first endpoint node (112) coupled to the intermediary node (114) via the point-to-point communication link (101), wherein the intermediary node (114) couples to a second endpoint node (112) via a second point-to-point communication link (101).

13. A computer readable storage medium comprising: computer program code means adapted to perform all the program code steps of any of claims 1 to 6 when said program is run on a programmable apparatus.

## Patentansprüche

1. Verfahren zum Verwalten mehrerer virtueller Kanäle in einer Punkt-zu-Punkt-Kommunikationsverbindung (101) zwischen einem ersten Knoten (112) und einem zweiten Knoten (114), wobei der erste Knoten (112) Warteschlangenressourcen aufweist, um mindestens einen geordneten virtuellen Kanal (220) zu unterstützen, und der zweite Knoten (114) Warteschlangenressourcen aufweist, um mindestens einen bypassfähigen virtuellen Kanal (210) zu unterstützen, wobei der geordnete virtuelle Kanal zumindest an dem ersten Knoten (112) Warteschlangenressourcen aufweist, um eine geordnete Warteschlange (212) zu unterstützen, und wobei der mindestens eine bypassfähige virtuelle Kanal (210) zumindest an dem zweiten Knoten (114) Warteschlangenressourcen aufweist, um sowohl eine geordnete Warteschlange (212) als auch eine Bypasswarteschlange (214) zu unterstützen, wobei die geordnete Warteschlange (212) und die Bypasswarteschlange (214) First-in-first-out/FIFO/-Warteschlangen sind, welche die Übertragung von Daten durch einen bypassfähigen virtuellen Kanal (210) unterstützen, um mögliche Datenblockierungen durch den bypassfähigen virtuellen Kanal (210) hindurch zu vermeiden, wobei das Verfahren umfasst:
Empfang eines oder mehrerer Datenpakete (410, 420), die Inhalt enthalten, um die mehreren virtuellen Kanäle in der Punkt-zu-Punkt-Kommunikationsverbindung (101) zu initialisieren, wobei das eine oder die mehreren Datenpakete eine Anzeige von Warteschlangenressourcen des zweiten Knotens (114) enthalten, die auf dem Inhalt des(der) empfangenen einen oder mehreren Datenpakete (410, 420) beruht;
Initialisieren eines oder mehrerer virtueller Kanäle in der Punkt-zu-Punkt-Kommunikationsverbindung, die zusammen durch den ersten und den zweiten Knoten (112, 114) unterstützt werden;
Umwandeln eines gegebenen bypassfähigen virtuellen Kanals (210), der durch den zweiten Knoten (114) unterstützt wird, in einen gegebenen geordneten virtuellen Kanal (220), der durch den ersten Knoten (112) unterstützt wird;
Initialisieren des umgewandelten gegebenen geordneten virtuellen Kanals (220), und
Abbilden einer Datenverkehrsklasse auf den umgewandelten und initialisierten geordneten virtuellen Kanal.

2. Verfahren nach Anspruch 1, wobei das Umwandeln des gegebenen bypassfähigen virtuellen Kanals (210) in einen gegebenen geordneten virtuellen Kanal (220) umfasst, dass dem umgewandelten gegebenen geordneten virtuellen Kanal (220) eine gegebene Kennung zugewiesen wird, die sich von einer Kennung unterscheidet, die dem gegebenen bypassfähigen virtuellen Kanal (210) zugewiesen ist, wobei die gegebene Kennung einer Kennung für einen geordneten virtuellen Kanal (220) entspricht, der durch die Warteschlangenressourcen am ersten Knoten (112) unterstützt wird.

3. Verfahren nach Anspruch 1, wobei das Abbilden der Datenverkehrsklasse auf den umgewandelten und initialisierten gegebenen geordneten virtuellen Kanal (220) ein Abbilden der Datenverkehrsklasse auf den umgewandelten und initialisierten gegebenen geordneten virtuellen Kanal (220) auf Basis eines Abbildungsschemas (920) umfasst.

4. Verfahren nach Anspruch 3, wobei das Abbildungsschema (920) auf mindestens einer statisch bestimmten Eingabe beruht.

5. Verfahren nach Anspruch 1, wobei die Datenverkehrsklasse die Datenverkehrsklasse umfasst, die auf der Basis der Prioritätsebene der Datenverkehrsklasse im Vergleich zu den anderen Datenverkehrsklassen klassifiziert ist, welche auf der Punkt-zu-Punkt-Kommunikationsverbindung übermittelt werden.

6. Verfahren nach Anspruch 3, ferner umfassend:
Empfangen eines gegebenen Datenpakets auf der Punkt-zu-Punkt-Kommunikationsverbindung (101), das Inhalt (1100) enthält, der anzeigt, dass das gegebene Datenpaket mit der Datenverkehrsklasse verbunden ist; und
Routen des gegebenen Datenpakets durch den umgewandelten und initialisierten gegebenen geordneten virtuellen Kanal (220) hindurch.

7. Knoten (114), umfassend:
Warteschlangenressourcen, um einen bypassfähigen virtuellen Kanal (210) in einer Punkt-zu-Punkt-Kommunikationsverbindung (101) zwischen dem Knoten (114) und einem zweiten Knoten (112) zu unterstützen, wobei der bypassfähige virtuelle Kanal (210) Warteschlangenressourcen aufweist, um sowohl eine geordnete Warteschlange (212) als auch eine Bypasswarteschlange (214) zu unterstützen, wobei die geordnete Warteschlange (212) und die Bypasswarteschlange (214) First-in-first-out/FIFO/-Warteschlangen sind, welche die Übertragung von Daten durch einen bypassfähigen virtuellen Kanal (210) unterstützen, um mögliche Datenblockierungen durch den bypassfähigen virtuellen Kanal (210) hindurch zu vermeiden; und
einen virtuellen Kanalmanager (300), der enthält:
Mittel für den Empfang eines oder mehrerer Datenpakete (410, 420), die Inhalt enthalten, um einen oder mehrere virtuelle Kanäle in der Punkt-zu-Punkt-Kommunikationsverbindung (101) zu initialisieren, wobei das eine oder die mehreren Datenpakete eine Anzeige von Warteschlangenressourcen des Knotens (114) an den virtuellen Kanalmanager enthalten, die auf dem Inhalt des/der empfangenen einen oder mehreren Datenpakete (410, 420) beruht; Mittel zum Initialisieren des einen oder der mehreren virtuellen Kanäle (210) in der Punkt-zu-Punkt-Kommunikationsverbindung, die zusammen durch den ersten und den zweiten Knoten (112, 114) unterstützt werden;
Mittel zum Umwandeln eines gegebenen bypassfähigen virtuellen Kanals (210), der durch den Knoten (114) unterstützt wird, in einen gegebenen geordneten virtuellen Kanal (220), der durch den zweiten Knoten (112) unterstützt wird, wobei der geordnete virtuelle Kanal (220) an dem zweiten Knoten (112) Warteschlangenressourcen aufweist, um eine geordnete Warteschlange (212) zu unterstützen;
Mittel zum Initialisieren des umgewandelten gegebenen geordneten virtuellen Kanals (220); und
Mittel zum Abbilden einer Datenverkehrsklasse auf den umgewandelten und initialisierten gegebenen geordneten virtuellen Kanal (220).

8. Knoten nach Anspruch 7, wobei die Mittel zum Umwandeln eingerichtet sind, dem umgewandelten gegebenen geordneten virtuellen Kanal (220) eine gegebene Kennung zuzuweisen, die sich von einer Kennung unterscheidet, die dem gegebenen bypassfähigen virtuellen Kanal (210) zugewiesen ist, wobei die gegebene Kennung einer Kennung für einen geordneten virtuellen Kanal (220) entspricht, der durch die Warteschlangenressourcen am zweiten Knoten (112) unterstützt wird.

9. Knoten nach Anspruch 7, wobei die Mittel zum Abbilden eingerichtet sind, die Datenverkehrsklasse auf den umgewandelten und initialisierten gegebenen geordneten virtuellen Kanal (220) auf Basis eines Abbildungsschemas (920) abzubilden.

10. Knoten nach Anspruch 7, wobei die Datenverkehrsklasse, die auf den umgewandelten und initialisierten gegebenen virtuellen Kanal abgebildet ist, eine Datenverkehrsklasse umfasst, die auf der Basis einer Priorität der Datenverkehrsklasse im Vergleich zu den anderen Datenverkehrsklassen auf der Punkt-zu-Punkt-Kommunikationsverbindung zwischen den Knoten übermittelt wird.

11. Knoten nach Anspruch 7, wobei der virtuelle Kanalmanager (300) ferner umfasst:
Mittel zum Empfangen eines gegebenen Datenpakets auf der Punkt-zu-Punkt-Kommunikationsverbindung (101), das Inhalt (1100) enthält, der anzeigt, dass das gegebenen Datenpaket mit der Datenverkehrsklasse verbunden ist; und
Mittel für das Routen des gegebenen Datenpakets durch den umgewandelten und initialisierten gegebenen geordneten virtuellen Kanal hindurch.

12. System (100) umfassend:
einen Zwischenknoten (114) nach einem der Ansprüche 7 bis 11; und
einen ersten Endpunktknoten (112), der an den Zwischenknoten (114) über die Punkt-zu-Punkt-Kommunikationsverbindung (101) angeschlossen ist, wobei der Zwischenknoten (114) an einen zweiten Endpunktknoten (112) über eine zweite Punkt-zu-Punkt-Kommunikationsverbindung (101) angeschlossen ist.

13. Computerlesbares Speichermedium, das Computerprogrammcodemittel umfasst, die geeignet sind, alle die Programmcodeschritte nach einem der Ansprüche 1 bis 6 auszuführen, wenn das Programm auf einer programmierbaren Vorrichtung läuft.

## Revendications

1. Procédé de gestion d'une pluralité de canaux virtuels sur une liaison de communication point à point (101) entre un premier noeud (112) et un second noeud (114), le premier noeud (112) ayant des ressources de file d'attente pour supporter au moins un canal virtuel ordonné (220), et le second noeud (114) ayant des ressources de file d'attente pour supporter au moins un canal virtuel capable de dérivation (210), ledit canal virtuel ordonné ayant, au moins sur le premier noeud (112), des ressources de file d'attente pour supporter une file d'attente ordonnée (212), et ledit au moins un canal virtuel capable de dérivation (210) ayant, au moins sur le second noeud (114), des ressources de file d'attente pour supporter à la fois une file d'attente ordonnée (212) et une file d'attente de dérivation (214), la file d'attente ordonnée (212) et la file d'attente de dérivation (214) étant des files d'attente de type premier entré-premier sorti qui supportent une transmission de données à travers un canal virtuel capable de dérivation (210) pour éviter des blocages de données potentiels à travers le canal virtuel capable de dérivation (210), le procédé comprenant :
la réception d'un ou plusieurs paquets de données (410, 420) qui comprennent un contenu pour initialiser la pluralité de canaux virtuels sur une liaison de communication point à point (110), un ou plusieurs paquets de données comprenant une indication de ressources de file d'attente du second noeud (114), sur la base du contenu d'un ou de plusieurs paquets de données reçus (410, 420) ;
l'initialisation d'un ou de plusieurs canaux virtuels sur une liaison de communication point à point couramment supportée par les premier et second noeuds (112, 114) ;
la transformation d'un canal virtuel capable de dérivation donné (210) supporté par le second noeud (114) en un canal virtuel ordonné donné (220) supporté par le premier noeud (112) ;
l'initialisation du canal virtuel ordonné donné transformé (220), et
le mappage d'une classe de trafic de données pour le canal virtuel ordonné transformé et initialisé.

2. Procédé selon la revendication 1, dans lequel la transformation du canal virtuel capable de dérivation donné (210) en un canal virtuel ordonné donné (220) comprend l'assignation d'un identifieur donné au canal virtuel ordonné donné transformé (220) qui est différent d'un identifieur assigné au canal virtuel capable de dérivation donné (210), dans lequel l'identifieur donné correspond à un identifieur pour un canal virtuel ordonné (220) supporté par les ressources de file d'attente sur le premier noeud (112).

3. Procédé selon la revendication 1, dans lequel le mappage de la classe de trafic de données en canal virtuel ordonné donné transformé et initialisé (220) comprend le mappage de la classe de trafic de données en canal virtuel ordonné donné transformé et initialisé (220) sur la base d'un système de mappage (920).

4. Procédé selon la revendication 3, dans lequel le système de mappage (920) est basé sur au moins une entrée déterminée statistiquement.

5. Procédé selon la revendication 1, dans lequel la classe de trafic de données comprend la classe de trafic de données classifiée sur la base du niveau de classe de trafic de données de priorité comme comparé aux autres classes de trafic de données transmis sur la liaison de communication point à point.

6. Procédé selon la revendication 3, comprenant en outre :
la réception d'un paquet de données donné sur la liaison de communication point à point (101) qui comprend un contenu (1100) indiquant que le paquet de données donné est associé à la classe de trafic de données ; et
le routage du paquet de données donné à travers le canal virtuel ordonné donné transformé et initialisé (220).

7. Noeud (114) comprenant :
des ressources de file d'attente pour supporter un canal virtuel capable de dérivation (210) sur une liaison de communication point à point (101) entre ledit noeud (114) et un second noeud (112), ledit canal virtuel capable de dérivation (210) ayant des ressources de file d'attente pour supporter à la fois une file d'attente ordonnée (212) et une file d'attente de dérivation (214), la file d'attente ordonnée (212) et la file d'attente de dérivation (214) étant des files d'attente de type premier entré-premier sorti qui supportent une transmission de données à travers un canal virtuel capable de dérivation (210) pour éviter des blocages de données potentiels à travers le canal virtuel capable de dérivation (210) ; et
un gestionnaire de canal virtuel (300) comprenant :
un moyen pour recevoir un ou plusieurs paquets de données (410, 420) qui comprennent le contenu pour initialiser un ou plusieurs canaux virtuels sur la liaison de communication point à point (101), un ou plusieurs paquets de données comprenant une indication de ressource de file d'attente du noeud (114), sur la base du contenu d'un ou de plusieurs paquets de données reçus (410, 420), le gestionnaire de canal virtuel ;
un moyen pour initialiser un ou plusieurs canaux virtuels (210) sur la liaison de communication point à point couramment supportée par lesdits noeuds (112, 114) ;
un moyen pour transformer un canal virtuel capable de dérivation donné (210) supporté par le noeud (114) en un canal virtuel ordonné donné (220) supporté par ledit second noeud (112), ledit canal virtuel ordonné (220) ayant sur ledit second noeud (112) des ressources de file d'attente pour supporter une file ordonnée (212) ;
un moyen pour initialiser le canal virtuel ordonné donné transformé (220) ; et
un moyen pour mapper une classe de trafic de données en canal virtuel ordonné donné transformé et initialisé (220).

8. Noeud selon la revendication 7, dans lequel le moyen pour transformer est disposé pour assigner un identifieur donné au canal virtuel ordonné donné transformé (220) qui est différent d'un identifieur assigné au canal virtuel capable de dérivation donné (210), dans lequel l'identifieur donné correspond à un identifieur pour le canal virtuel ordonné (220) supporté par les ressources de file d'attente sur le second noeud (112).

9. Noeud selon la revendication 7, dans lequel le moyen pour mappage est disposé pour mapper la classe de trafic de données pour le canal virtuel ordonné donné transformé et initialisé (220) sur la base d'un système de mappage (920).

10. Noeud selon la revendication 7, dans lequel la classe de trafic de données mappées pour le canal virtuel donné transformé et initialisé comprend une classe de trafic de données basée sur une priorité de classe de trafic de données comme comparé aux autres classes de trafic données transmises sur la liaison de communication point à point entre les noeuds.

11. Noeud selon la revendication 7, dans lequel le gestionnaire de canal virtuel (300) comprend en outre :
un moyen pour recevoir un paquet de données donné sur la liaison de communication point à point (101) qui comprend un contenu (1100) indiquant que le paquet de données donné est associé à la classe de trafic de données ; et
un moyen pour router le paquet de données donné à travers le canal virtuel ordonné donné transformé et initialisé.

12. Système (100) comprenant :
un noeud intermédiaire (114) selon l'une quelconque des revendications 7 à 11 ; et
un premier noeud de point d'extrémité (112) couplé au noeud intermédiaire (114) via la liaison de communication point à point (101), dans lequel le noeud intermédiaire (114) couple un second noeud de point d'extrémité (112) via une seconde liaison de communication point à point (101).

13. Support de stockage lisible par ordinateur comprenant un moyen de code de programme informatique adapté pour réaliser toutes les étapes de code de programme d'une quelconque des revendications 1 à 6 lorsque ledit programme est exécuté sur un appareil programmable.
